# EUROPEAN PATENT APPLICATION

(11) **EP 4 803 356 A1**
(43) Date of publication of application: **09.09.2026**
(21) Application number: 24884338.5
(22) Date of filing: 29.09.2024
(51) Int. Cl.: B60L 58/10, B60L 53/62

(54) **CONTROL METHOD, BATTERY SYSTEM, AND POWER SUPPLY SYSTEM**

(30) Priority: 31.10.2023 CN 202311440976
(71) Applicant: BYD Company Limited, Shenzhen, Guangdong 518118 (CN)
(72) Inventor: LING, Heping, Shenzhen, Guangdong 518118 (CN); YAN, Lei, Shenzhen, Guangdong 518118 (CN); CHANG, Dongbo, Shenzhen, Guangdong 518118 (CN); YUAN, Shuai, Shenzhen, Guangdong 518118 (CN); WANG, Han, Shenzhen, Guangdong 518118 (CN)
(74) Representative: Mathys & Squire
(86) International application number: PCT/CN2024/122137
(87) International publication number: WO 2025/092333

(57) **Abstract**

A control method, a battery system, and a power supply system are provided. The control method includes: when detecting a signal of a first charging port and/or a signal of a second charging port, controlling a first switch circuit to enable the first charging port and/or the second charging port to charge a power battery; and controlling a second switch circuit to enable the power battery to undergo pulse charging and discharging, so that the battery is self-heated.

## Description

This application claims priority to Chinese Patent Application No. 202311440976.6, filed with the China National Intellectual Property Administration on October 31, 2023 and entitled "CONTROL METHOD, BATTERY SYSTEM, AND POWER SUPPLY SYSTEM", which is incorporated herein by reference in its entirety.

### TECHNICAL FIELD

This application relates to the field of electronic technologies, and specifically, to a control method, a battery system, and a power supply system.

### BACKGROUND

With the rapid development of new energy vehicles, the proportion of electric vehicles in the automobile market increases year by year, and charging efficiency of the electric vehicles becomes an issue of increasing concern. To improve charging efficiency, a current solution is mainly high-power direct-current charging technologies or battery swapping technologies. However, because high-voltage platform high-power charging facilities are not yet widely deployed, charging speeds of electric vehicles that have the high-power direct-current charging technologies are still limited by an output voltage and power of direct-current charging devices.

In a low temperature environment, battery performance is degraded due to reduced activity of electrochemical substances inside a battery. For a high-power charging facility, generally, a heating apparatus may be disposed outside a battery to improve overall temperature of the battery, thereby improving charging performance of the battery. For example, the battery is heated by using a heating film with a positive temperature coefficient (PTC), or the battery is heated through liquid medium conduction. In these heating methods, energy loss is caused when heat is transmitted from a heat source to the battery, and heating efficiency is relatively low.

### SUMMARY

According to a first aspect, an embodiment of this application provides a control method, including: when detecting a signal of a first charging port and/or a signal of a second charging port, controlling a first switch circuit to enable the first charging port and/or the second charging port to charge a power battery; and controlling a second switch circuit to enable the power battery to undergo pulse charging and discharging, so that the power battery is self-heated.

In some implementations, controlling the first switch circuit to enable the first charging port and/or the second charging port to charge the power battery includes: turning on a first switch when an output voltage of a charging pile is lower than a charging voltage required by the power battery; and turning on a first lower bridge arm switch to charge a first inductor, and turning off the first lower bridge arm switch and turning on a first upper bridge arm switch, so that the first inductor and the charging pile charge the power battery together, wherein the first switch circuit includes the first switch, a first bridge arm switch, and the first inductor, and the first bridge arm switch includes the first upper bridge arm switch and the first lower bridge arm switch.

In some implementations, controlling the first switch circuit to enable the first charging port and/or the second charging port to charge the power battery includes: turning on a first switch when an output voltage of a charging pile is higher than a charging voltage required by the power battery; and turning on a first upper bridge arm switch, so that the charging pile charges the power battery, wherein the first switch circuit includes the first switch and a first bridge arm switch, and the first bridge arm switch includes the first upper bridge arm switch and a first lower bridge arm switch.

In some implementations, controlling the second switch circuit to enable the power battery to undergo pulse charging and discharging includes: turning on a second switch; and at a preset frequency, cyclically turning on a second upper bridge arm switch to charge a second inductor, turning off the second upper bridge arm switch to enable the second inductor to discharge, turning on a second lower bridge arm switch to charge the second inductor, and turning off the second lower bridge arm switch to enable the second inductor to discharge, so that currents between at least one half-pack of the power battery oscillate with each other to perform pulse charging and discharging, wherein the second switch circuit includes the second switch, the second inductor, and a second bridge arm switch, and the second bridge arm switch includes the second upper bridge arm switch and the second lower bridge arm switch.

According to a second aspect, an embodiment of this application provides a battery system, and the battery system may include:
a power battery, configured to store energy;
a first charging port, wherein a positive electrode of the first charging port is electrically connected to a positive electrode of a first switch circuit, and a negative electrode of the first charging port is electrically connected to a negative electrode of the power battery;
a second charging port, wherein a positive electrode of the second charging port is electrically connected to the positive electrode of the first switch circuit, and a negative electrode of the second charging port is electrically connected to the negative electrode of the power battery;
the first switch circuit, wherein the first switch circuit is electrically connected to the power battery;
a second switch circuit, wherein the second switch circuit is separately electrically connected to a positive electrode and the negative electrode of the power battery and a half-pack position of the power battery; and
a control unit, wherein the control unit is separately electrically connected to the first charging port, the second charging port, the first switch circuit, and the second switch circuit.

The control unit is configured to: when detecting a signal of the first charging port and/or a signal of the second charging port, control the first switch circuit to enable the first charging port and/or the second charging port to charge the power battery.

The control unit is further configured to control the second switch circuit to enable the power battery to undergo pulse charging and discharging, so that the power battery is self-heated.

In some implementations, the first switch circuit includes a first switch, a first inductor, and a first bridge arm switch, the first bridge arm switch includes a first upper bridge arm switch and a first lower bridge arm switch that are connected in series, a series connection point of the first upper bridge arm switch and the first lower bridge arm switch is a bridge arm midpoint of the first bridge arm switch, and the bridge arm midpoint of the first bridge arm switch is a first bridge arm. A first terminal of the first switch serves as an input terminal of the first switch circuit, the first terminal of the first switch is electrically connected to the positive electrode of the first charging port, a second terminal of the first switch is electrically connected to a first terminal of the first inductor, a second terminal of the first inductor is electrically connected to the first bridge arm midpoint, and two terminals of the first bridge arm switch serve as output terminals of the first switch circuit.

In some implementations, the control unit is further configured to:
turn on the first switch when an output voltage of a charging pile is lower than a charging voltage required by the power battery; and
turn on the first lower bridge arm switch to charge the first inductor, and turn off the first lower bridge arm switch and turn on the first upper bridge arm switch, so that the first inductor and the charging pile charge the power battery together.

In some implementations, the control unit is further configured to:
turn on the first switch when an output voltage of a charging pile is higher than a charging voltage required by the power battery; and
turn on the first upper bridge arm switch, so that the output voltage of the charging pile charges the power battery.

In some implementations, the second switch circuit includes a second switch, a second inductor, and a second bridge arm switch, and the second bridge arm switch includes a second upper bridge arm switch and a second lower bridge arm switch that are connected in series. A first terminal of the second inductor is electrically connected to a half-pack position of the power battery through the second switch, a second terminal of the second inductor is electrically connected to a second bridge arm midpoint, and two terminals of the second bridge arm switch are respectively electrically connected to the positive electrode and the negative electrode of the power battery,

A series connection point of the second upper bridge arm switch and the second lower bridge arm switch is a bridge arm midpoint of the second bridge arm switch, and the bridge arm midpoint of the second bridge arm switch is the second bridge arm midpoint.

In some implementations, the control unit is further configured to:
turn on the second switch; and
at a preset frequency, cyclically turn on the second upper bridge arm switch to charge a three-phase winding of the second motor, turn off the second upper bridge arm switch to enable the three-phase winding of the second motor to discharge, turn on the second lower bridge arm switch to charge the three-phase winding of the second motor, and turn off the second lower bridge arm switch to enable the three-phase winding of the second motor to discharge, so that currents between at least one half-pack of the power battery oscillate with each other to perform pulse charging and discharging.

In some implementations, the first switch circuit includes a first switch, a three-phase winding of a first motor, and a plurality of first bridge arm switches connected in parallel, one first bridge arm switch includes a first upper bridge arm switch and a first lower bridge arm switch that are connected in series, a series connection point of the first upper bridge arm switch and the first lower bridge arm switch is a bridge arm midpoint of the first bridge arm switch, and the bridge arm midpoint of the first bridge arm switch is a first bridge arm midpoint.

A first terminal of the first switch serves as an input terminal of the first switch circuit, the first terminal of the first switch is electrically connected to the positive electrode of the first charging port, a second terminal of the first switch is electrically connected to a common terminal of the three-phase winding of the first motor, the plurality of first bridge arm midpoints are electrically connected to a one-phase winding of the three-phase winding of the first motor, and parallel connection terminals of the plurality of first bridge arm switches connected in parallel serve as output terminals of a bridge arm conversion module.

In some implementations, the control unit is further configured to:
turn on the first switch when an output voltage of a charging pile is lower than a charging voltage required by the power battery; and
first simultaneously turn on a plurality of first lower bridge arm switches to charge the three-phase winding of the first motor, and then simultaneously turn off the plurality of first lower bridge arm switches and simultaneously turn on a plurality of first upper bridge arm switches, so that the three-phase winding of the first motor and the charging pile charge the power battery together.

In some implementations, the control unit is further configured to:
turn on the first switch when an output voltage of a charging pile is higher than a charging voltage required by the power battery; and
simultaneously turn on a plurality of first upper bridge arm switches, so that the charging pile charges the power battery.

In some implementations, the second switch circuit includes a second switch, a three-phase winding of a second motor, and a plurality of second bridge arm switches connected in parallel, one second bridge arm switch includes a second upper bridge arm switch and a second lower bridge arm switch that are connected in series, a series connection point of the second upper bridge arm switch and the second lower bridge arm switch is a bridge arm midpoint of the second bridge arm switch, and the bridge arm midpoint of the second bridge arm switch is a second bridge arm midpoint.

A common terminal of the three-phase winding of the second motor is electrically connected to a half-pack position of the power battery through the second switch, the plurality of second bridge arm midpoints are electrically connected to a one-phase winding of the three-phase winding of the motor, and parallel connection terminals of the plurality of second bridge arm switches connected in parallel are separately electrically connected to the positive electrode and the negative electrode of the power battery.

In some implementations, the control unit is further configured to:
turn on the second switch; and
at a preset frequency, cyclically simultaneously turn on a plurality of second upper bridge arm switches to charge the second inductor, simultaneously turn off the plurality of second upper bridge arm switches to enable the second inductor to discharge, simultaneously turn on a plurality of second lower bridge arm switches to charge the second inductor, and simultaneously turn off the plurality of second lower bridge arm switches to enable the second inductor to discharge, so that currents between at least one half-pack of the power battery oscillate with each other to perform pulse charging and discharging.

In some implementations, the bridge arm switch is an insulated gate bipolar transistor (IGBT).

According to a third aspect, an embodiment of this application provides a power supply system. The power supply system includes an electric device and the battery system according to the second aspect or any one of the embodiments of the second aspect, the battery system is configured to implement the control method according to the first aspect or any one of the embodiments of the first aspect, and the battery system is configured to supply electric energy to the electric device.

According to a fourth aspect, an embodiment of this application provides a computer-readable storage medium. The computer-readable storage medium stores a computer program, and when the computer program is executed by a processor, the control method according to the first aspect or any one of the embodiments of the first aspect is implemented.

According to a fifth aspect, an embodiment of this application provides a chip. The chip includes instructions, and when the instructions are run, the control method according to the first aspect or any one of the embodiments of the first aspect is implemented.

According to a sixth aspect, an embodiment of this application provides a vehicle. The vehicle includes the battery system according to the second aspect or any one of the embodiments of the second aspect.

### BRIEF DESCRIPTION OF DRAWINGS

To describe technical solutions in implementations of this application or in conventional technologies more clearly, the following briefly describes the accompanying drawings needed for use in the description of the implementations or the conventional technologies. Clearly, the accompanying drawings in the following description are merely some implementations of this application, and a person of ordinary skill in the art may still obtain other accompanying drawings from these accompanying drawings without creative efforts.
FIG. 1 is a flowchart of a control method according to an embodiment of this application;
FIG. 2 is a schematic diagram of a structure of a battery system according to an embodiment of this application;
FIG. 3 is a schematic diagram of a structure of another battery system according to an embodiment of this application;
FIG. 4 is a schematic diagram of a structure of another battery system according to an embodiment of this application;
FIG. 5 is a schematic diagram of a structure of another battery system according to an embodiment of this application;
FIG. 6 to FIG. 9 are schematic diagrams of a current flow direction according to an embodiment of this application; and
FIG. 10 is a schematic diagram of a vehicle according to an embodiment of this application.

Descriptions of reference numerals:
20-battery system, 200-power battery, 201-first charging port, 202-second charging port, 203-first switch circuit, 204-second switch circuit, and 205-control unit.

### DESCRIPTION OF EMBODIMENTS

The following clearly and completely describes the technical solutions in implementations of this application with reference to the accompanying drawings in the implementations of this application. Clearly, the described implementations are merely some but not all of implementations of this application. Based on the implementations of this application, all other implementations obtained by a person of ordinary skill in the art without creative efforts shall fall within the protection scope of this application.

It will be noted that when an element is considered to be "electrically connected to" another element, the element may be directly or indirectly connected to another element.

Unless otherwise defined, all technical and scientific terms used in this application have the same meanings as those commonly understood by a person skilled in the art that belongs to this application. The terms used in the specification of this application are merely intended to describe specific embodiments, and are not intended to limit this application. The term "and/or" used in this application includes any and all combinations of one or more related listed items.

Some implementations of this application are described in detail below with reference to the accompanying drawings. In absence of conflicts, the following embodiments and features in the embodiments may be mutually combined.

This application provides a control method, a battery system, and a power supply system.

In embodiments of this application, for a first charging port and a second charging port, when charging is performed through either charging circuit or charging is performed through both circuits simultaneously, both charging modes can implement self-heating. A second switch circuit is used to enable a power battery to undergo pulse charging and discharging, and internal resistance of a battery is used to generate heat to implement self-heating of the battery. Self-heating has high temperature rise efficiency, so that a battery temperature can be rapidly increased to improve battery charging performance.

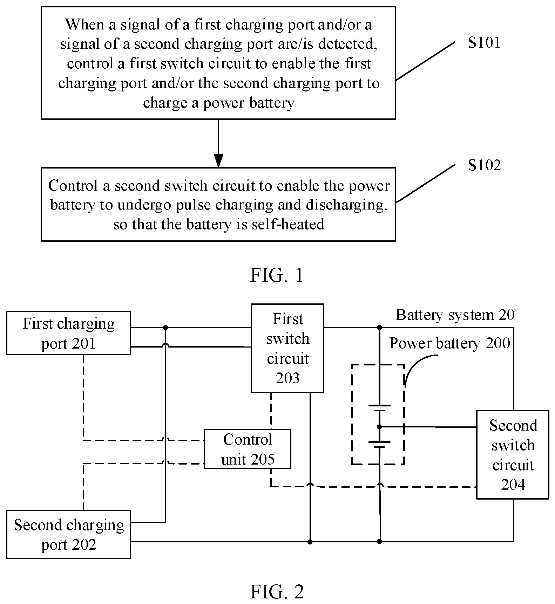

Referring to FIG. 1, FIG. 1 is a flowchart of a control method according to an embodiment of this application. As shown in FIG. 1, the control method may include the following steps.

S101: when a signal of a first charging port and/or a signal of a second charging port are/is detected, control a first switch circuit to enable the first charging port and/or the second charging port to charge a power battery.

When the power battery needs to be charged, electric energy of an external power supply device (for example, a charging pile) may be used to implement single-gun/double-gun charging on the power battery through the first charging port and/or the second charging port. The signal may refer to an electrical signal that is generated, or a physical signal, a CAN signal, or the like that is in contact when a charging gun of a charging pile is inserted into the first charging port.

An execution body in this embodiment may be a control unit, and the control unit may communicate with an external charging pile to control the first switch circuit to enable the first charging port and/or the second charging port to charge the power battery. The control unit may include two independent charging control guide circuits, and exchange a CAN signal with the charging pile through a charging subnet to control each charging phase and control on/off of two charging circuits. It will be noted that an external power supply may be a direct current or an alternating current. When the external power supply is an alternating current, the alternating current may be converted into a direct current by using a converter, and then the direct current charges the power battery. This is not limited in this embodiment of this application.

The first switch circuit includes a first switch, a first bridge arm switch, and a first inductor, and the first bridge arm switch includes a first upper bridge arm switch and a first lower bridge arm switch.

In a possible implementation, when an output voltage of a charging pile is lower than a charging voltage required by the power battery, the control unit may control the first switch circuit to implement boost charging. A charging control procedure may be as follows: when detecting a gun signal of the first charging port and/or a gun signal of the second charging port, the control unit may normally enter a charging procedure. To be specific, the control unit may turn on the first switch, and the first switch circuit is powered on. The control unit first turns on the first lower bridge arm switch to charge the first inductor, then turns off the first lower bridge arm switch and turns on the first upper bridge arm switch, so that the first inductor and the output voltage of the charging pile charge the power battery together. Because the current direction remains unchanged, a voltage of the inductor and the output voltage of the external charging pile are superimposed to charge the power battery to implement boost charging.

In a possible implementation, when an output voltage of a charging pile is higher than a charging voltage required by the power battery, the first switch is turned on, and the first switch circuit is powered on. The first upper bridge arm switch is turned on, so that the charging pile charges the power battery. In other words, the first upper bridge arm switch is directly connected to the power battery for charging.

The two charging circuits are independently controlled. When there is a charging interaction procedure in either circuit, the control unit correspondingly controls the charging procedure. Separate charging by either circuit may be implemented, or simultaneous charging by both circuits may be implemented. Simultaneous charging by both circuits may increase the charging speed, thereby meeting the high-power charging requirement of a vehicle.

S102: control a second switch circuit to enable the power battery to undergo pulse charging and discharging, so that the power battery is self-heated.

Because high-power charging requires a proper battery temperature, and battery charging performance is degraded at a low temperature, advantages of double-gun high-power charging cannot be fully realised. Therefore, the control unit controls the first switch circuit to enable the first charging port and/or the second charging port to charge the power battery, and may further control the second switch circuit to enable the power battery to undergo pulse charging and discharging, to implement self-heating of the battery through heating of internal resistance of the battery.

The second switch circuit may include a second switch, a second inductor, and a second bridge arm switch, and the second bridge arm switch includes a second upper bridge arm switch and a second lower bridge arm switch.

In a possible implementation, the control unit turns on the second switch, and the second switch circuit is powered on. At a preset frequency, the control unit cyclically turns on the second upper bridge arm switch to charge the second inductor, turns off the second upper bridge arm switch to enable the second inductor to discharge, turns on the second lower bridge arm switch to charge the second inductor, and turns off the second lower bridge arm switch to enable the second inductor to discharge, so that currents between at least one half-pack of the power battery oscillate with each other to perform pulse charging and discharging. The at least one half-pack will be understood as a part or all of the power battery. Only the half-pack is used as an example for description, or another part that can represent the power battery may be described. This is not limited in this application.

The control unit may simultaneously turn on the first switch and/or the second switch, that is, the power battery may be self-heated while the power battery is charged.

For the first charging port and the second charging port, when charging is performed through either charging circuit or charging is performed through both circuits simultaneously, both charging modes can implement self-heating. The second switch circuit is used to enable the power battery to undergo pulse charging and discharging, and internal resistance of a battery is used to generate heat to implement self-heating of the battery. Self-heating has high temperature rise efficiency, so that a battery temperature can be rapidly increased to improve battery charging performance.

When the first charging port and the second charging port simultaneously charge the power battery, advantages of dual-gun high-power charging are brought into full play. With support of self-heating and dual-gun high-power charging power, a battery charging speed at a low temperature can be significantly increased.

Referring to FIG. 2, FIG. 2 is a schematic diagram of a structure of a battery system 20 according to an embodiment of this application. As shown in FIG. 2, the battery system may include a power battery 200, a first charging port 201, a second charging port 202, a first switch circuit 203, a second switch circuit 204, and a control unit 205.

The power battery is configured to store energy.

A positive electrode of the first charging port 201 is electrically connected to a positive electrode of the first switch circuit, and a negative electrode of the first charging port is electrically connected to a negative electrode of the power battery.

A positive electrode of the second charging port 202 is electrically connected to the positive electrode of the first switch circuit, and a negative electrode of the second charging port is electrically connected to the negative electrode of the power battery.

The first switch circuit 203 is electrically connected to the power battery.

The second switch circuit 204 is separately electrically connected to a positive electrode and the negative electrode of the power battery and a half-pack position of the power battery. It will be understood that the half-pack position of the power battery may mean the following: as shown in FIG. 2, the second switch circuit is connected to a midpoint of the power battery, which may indicate that the power battery is divided into two half-packs. Certainly, the second switch circuit may alternatively not be connected to the midpoint of the power battery, but is connected above or below the midpoint, and in this case, the power battery is divided into two parts. In this application, only the half-pack is used as an example for description, or another part that can represent the power battery may be described. This is not limited in this application.

The control unit 205 is separately electrically connected to the first charging port 201, the second charging port 202, the first switch circuit 203, and the second switch circuit 204.

The control unit 205 is configured to: when detecting a signal of the first charging port 201 and/or a signal of the second charging port 202, control the first switch circuit 203 to enable the first charging port 201 and/or the second charging port 202 to charge the power battery.

The control unit 205 is further configured to control the second switch circuit 204 to enable the power battery to undergo pulse charging and discharging, so that the power battery is self-heated.

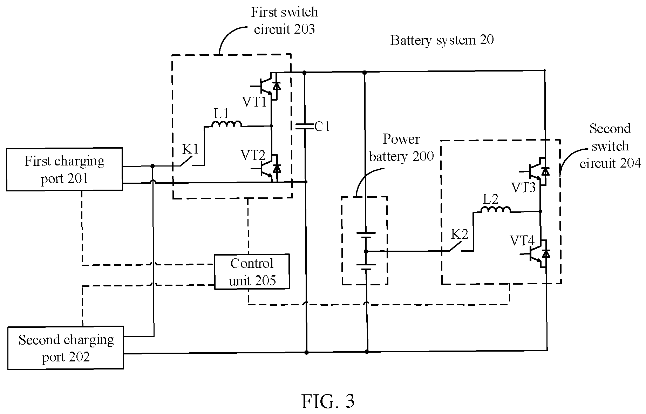

Specifically, referring to FIG. 3, FIG. 3 is a schematic diagram of a structure of another battery system 20 according to an embodiment of this application. As shown in FIG. 3:

The first switch circuit 203 may include a first switch K1, a first inductor L1, and a first bridge arm switch, the first bridge arm switch includes a first upper bridge arm switch VT1 and a first lower bridge arm switch VT2 that are connected in series, a series connection point of the first upper bridge arm switch VT1 and the first lower bridge arm switch VT2 is a bridge arm midpoint of the first bridge arm switch, and the bridge arm midpoint of the first bridge arm switch is a first bridge arm midpoint.

A first terminal of the first switch K1 serves as an input terminal of the first switch circuit 203, the first terminal of the first switch K1 is electrically connected to the positive electrode of the first charging port 201, a second terminal of the first switch K1 is electrically connected to a first terminal of the first inductor L1, the second terminal of the first inductor L1 is electrically connected to the first bridge arm midpoint, and two terminals of the first bridge arm switch serve as output terminals of the first switch circuit 203.

Optionally, the first switch circuit 203 may further include a first capacitor C1, the first capacitor C1 is electrically connected to the first bridge arm switch in parallel, and the first capacitor C1 may be configured to filter an output current of the first switch circuit 203.

In a possible implementation, the control unit 205 may be configured to: turn on the first switch K1 when an output voltage of a charging pile is lower than a charging voltage required by the power battery; and first turn on the first lower bridge arm switch VT2 to charge the first inductor L1, and then turn off the first lower bridge arm switch VT2 and turn on the first upper bridge arm switch VT1, so that a voltage of the first inductor L1 and the charging pile charge the power battery together.

In a possible implementation, the control unit 205 may be configured to: turn on the first switch K1 when an output voltage of a charging pile is higher than a charging voltage required by the power battery; and turn on the first upper bridge arm switch VT1, so that the charging pile charges the power battery.

The second switch circuit 204 includes a second switch K2, a second inductor L2, and a second bridge arm switch, the second bridge arm switch includes a second upper bridge arm switch VT3 and a second lower bridge arm switch VT4 that are connected in series. A first terminal of the second inductor L2 is electrically connected to a half-pack position of the power battery through the second switch K2, a second terminal of the second inductor L2 is electrically connected to a second bridge arm midpoint, and two terminals of the second bridge arm switch are respectively electrically connected to the positive electrode and the negative electrode of the power battery.

A series connection point of the second upper bridge arm switch VT3 and the second lower bridge arm switch VT4 is a bridge arm midpoint of the second bridge arm switch, and the bridge arm midpoint of the second bridge arm switch is the second bridge arm midpoint.

The control unit 205 is further configured to: turn on the second switch; and at a preset frequency, cyclically turn on the second upper bridge arm switch to charge the second inductor, turn off the second upper bridge arm switch to enable the second inductor to discharge, turn on the second lower bridge arm switch to charge the second inductor, and turn off the second lower bridge arm switch to enable the second inductor to discharge, so that currents between at least one half-pack of the power battery oscillate with each other to perform pulse charging and discharging.

For a specific control method performed by the control unit, refer to the foregoing description of step S101 and S102. Details are not described herein again.

In this embodiment of this application, based on FIG. 2, a possible refined structure of the battery system is provided, to describe in detail how the control unit controls elements in the first switch circuit and the second switch circuit to implement the following: when charging is performed through either charging circuit or charging is performed through both circuits simultaneously, both charging modes can implement self-heating. Self-heating has high temperature rise efficiency, so that a battery temperature can be rapidly increased to improve battery charging performance, and advantages of dual-gun high-power charging are brought into full play. With support of self-heating and dual-gun high-power charging power, a battery charging speed at a low temperature can be significantly increased.

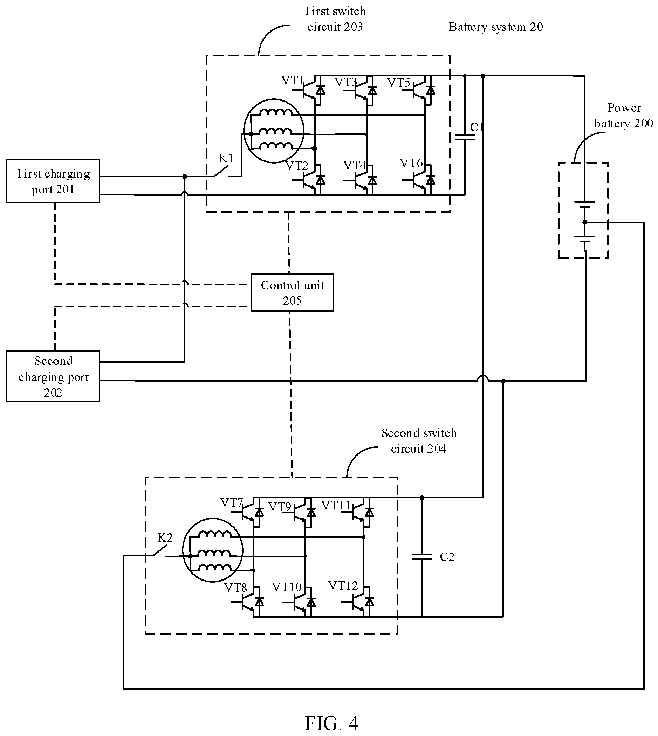

Specifically, referring to FIG. 4, FIG. 4 is a schematic diagram of a structure of still another battery system 20 according to an embodiment of this application. As shown in FIG. 4:

The first switch circuit 203 includes a first switch K1, a three-phase winding of a first motor, and a plurality of first bridge arm switches connected in parallel. One first bridge arm switch includes a first upper bridge arm switch and a first lower bridge arm switch (as shown in FIG. 4, a plurality of first upper bridge arm switches are VT1, VT3, and VT5, and a plurality of first lower bridge arm switches are VT2, VT4, and VT6) that are connected in series. A series connection point of the first upper bridge arm switch and the first lower bridge arm switch is a bridge arm midpoint of the first bridge arm switch, and the bridge arm midpoint of the first bridge arm switch is a first bridge arm midpoint.

A first terminal of the first switch K1 serves as an input terminal of the first switch circuit 203, the first terminal of the first switch K1 is electrically connected to the positive electrode of the first charging port 201, a second terminal of the first switch K1 is electrically connected to a common terminal of the three-phase winding of the first motor, the plurality of first bridge arm midpoints are electrically connected to a one-phase winding of the three-phase winding of the first motor, and parallel connection terminals of the plurality of first bridge arm switches connected in parallel serve as output terminals of a bridge arm conversion module.

Optionally, the first switch circuit 203 may further include a first capacitor C1, the first capacitor C1 is electrically connected to the first bridge arm switch in parallel, and the first capacitor C1 may be configured to filter an output current of the first switch circuit 203.

In a possible implementation, the control unit 205 is further configured to: turn on the first switch K1 when an output voltage of a charging pile is lower than a charging voltage required by the power battery; and first simultaneously turn on the plurality of first lower bridge arm switches VT2, VT4, and VT6 to charge the three-phase winding of the first motor, and then simultaneously turn off the plurality of first lower bridge arm switches VT2, VT4, and VT6 and simultaneously turn on the plurality of first upper bridge arm switches VT1, VT3, and VT5, so that a voltage of the three-phase winding of the first motor and the charging pile charge the power battery together.

In a possible implementation, the control unit 205 is further configured to: turn on the first switch K1 when an output voltage of a charging pile is higher than a charging voltage required by the power battery; and simultaneously turn on the plurality of first upper bridge arm switches VT1, VT3, and VT5, so that the charging pile charges the power battery.

The three-phase winding of the first motor may be equivalent to the first inductor L1 in the foregoing embodiment.

The second switch circuit 204 includes a second switch K2, a three-phase winding of a second motor, and a plurality of second bridge arm switches connected in parallel. One second bridge arm switch includes a second upper bridge arm switch and a second lower bridge arm switch (as shown in FIG. 4, a plurality of second upper bridge arm switches are VT7, VT9, and VT11, and a plurality of second lower bridge arm switches are VT8, VT10, and VT12) that are connected in series. A series connection point of the second upper bridge arm switch and the second lower bridge arm switch is a bridge arm midpoint of the second bridge arm switch, and the bridge arm midpoint of the second bridge arm switch is a second bridge arm midpoint.

A common terminal of the three-phase winding of the second motor is electrically connected to a half-pack position of the power battery through the second switch K2, the plurality of second bridge arm midpoints are electrically connected to a one-phase winding of the three-phase winding of the motor, and parallel connection terminals of the plurality of second bridge arm switches connected in parallel are separately electrically connected to the positive electrode and the negative electrode of the power battery.

Optionally, the second switch circuit 204 may further include a second capacitor C2, the second capacitor C2 is electrically connected to the second bridge arm switch in parallel, and the second capacitor C2 may be configured to filter an input current of the second switch circuit 204.

In a possible implementation, the control unit 205 is further configured to: turn on the second switch; and at a preset frequency, cyclically simultaneously turn on the plurality of second upper bridge arm switches to charge the three-phase winding of the second motor, simultaneously turn off the plurality of second upper bridge arm switches to enable the three-phase winding of the second motor to discharge, simultaneously turn on the plurality of second lower bridge arm switches to charge the three-phase winding of the second motor, and simultaneously turn off the plurality of second lower bridge arm switches to enable the three-phase winding of the second motor to discharge, so that currents between at least one half-pack of the power battery oscillate with each other to perform pulse charging and discharging.

The three-phase winding of the second motor may be equivalent to the second inductor L2 in the foregoing embodiment.

In this embodiment of this application, based on FIG. 2, a possible refined structure of the battery system is provided, to describe in detail how the control unit controls elements in the first switch circuit and the second switch circuit to implement the following: when charging is performed through either charging circuit or charging is performed through both circuits simultaneously, both charging modes can implement self-heating. Self-heating has high temperature rise efficiency, so that a battery temperature can be rapidly increased to improve battery charging performance, and advantages of dual-gun high-power charging are brought into full play. With support of self-heating and dual-gun high-power charging power, a battery charging speed at a low temperature can be significantly increased. In addition, the first switch circuit and the second switch circuit may reuse a motor controller (the bridge arm switch) and a three-phase winding (coil) of a motor, thereby reducing vehicle costs. This is applicable to a multi-motor vehicle model. For example, in a four-wheel-drive vehicle model, both the first switch circuit and the second switch circuit may reuse the motor controller and the three-phase winding of the motor; and in a two-wheel-drive vehicle model, one of the first switch circuit and the second switch circuit may reuse the motor controller and the three-phase winding of the motor. Therefore, vehicle costs of the multi-motor vehicle model are reduced.

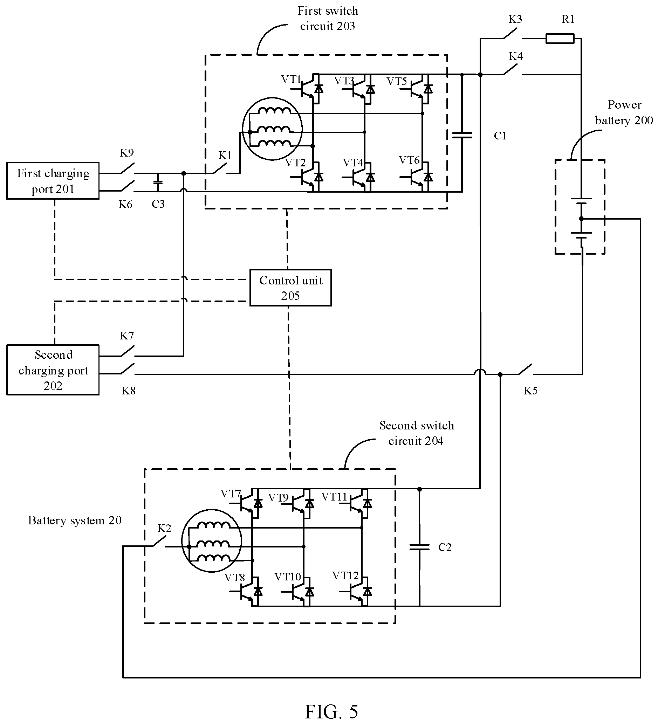

Further, referring to FIG. 5, FIG. 5 is a schematic diagram of a structure of still another battery system 20 according to an embodiment of this application. As shown in FIG. 5:

Based on FIG. 4, the battery system may further include a third switch K3, a fourth switch K4, a fifth switch K5, a sixth switch K6, a seventh switch K7, an eighth switch K8, a ninth switch K9, a pre-charge resistor R1, and a third capacitor C3. The third capacitor C3 may be used for voltage reduction at a charging port. The third switch K3 and the pre-charge resistor R1 are connected in series, the second switch circuit 204 is electrically connected to the positive electrode of the power battery through the third switch K3 and the pre-charge resistor R1 that are connected in series, the first switch circuit 203 is electrically connected to the positive electrode of the power battery through the fourth switch K4, the second switch circuit 204 is electrically connected to the negative electrode of the power battery through the fifth switch K5, the positive electrode and the negative electrode of the first charging port 201 are respectively electrically connected to an input terminal and an output terminal of the first switch circuit 203 through the sixth switch K6 and the ninth switch K9, the third capacitor C3 is electrically connected to the input terminal and the output terminal of the first switch circuit 203 in parallel, and the positive electrode and the negative electrode of the second charging port 202 are respectively electrically connected to the input terminal and the output terminal of the first switch circuit 203 through the seventh switch K7 and the eighth switch K8.

### In dual-circuit charging control:

In a possible implementation, when an output voltage of a charging pile is lower than a charging voltage required by the power battery, the control unit 205 may control the first switch circuit to implement boost charging. A charging control procedure may be as follows: when detecting a gun signal of the first charging port 201 and a gun signal of the second charging port 202, the control unit 205 may normally enter a charging procedure. Before boost charging starts, the first switch K1, the fourth switch K4, and the fifth switch K5 may be turned on, the sixth switch K6 and the ninth switch K9 in a first charging circuit may be turned on, and the seventh switch K7 and the eighth switch K8 in a second charging circuit may be turned on. Boost charging may be divided into two phases:

First, the plurality of first lower bridge arm switches VT2, VT4, and VT6 are simultaneously turned on to charge the three-phase winding of the first motor.

Then, the plurality of first lower bridge arm switches VT2, VT4, and VT6 are simultaneously turned off and the plurality of first upper bridge arm switches VT1, VT3, and VT5 are simultaneously turned on, so that a voltage of the three-phase winding of the first motor and the charging pile charge the power battery together.

In a possible implementation, when an output voltage of a charging pile is higher than a charging voltage required by the power battery, the control unit 205 may simultaneously turn on the plurality of first upper bridge arm switches VT1, VT3, and VT5, so that the charging pile charges the power battery.

The two charging circuits are independently controlled. When there is a charging interaction procedure in either circuit, the control unit correspondingly controls the charging procedure. Separate charging by either circuit may be implemented, or simultaneous charging by both circuits may be implemented. Simultaneous charging by both circuits may increase charging speed, thereby meeting a high-power charging requirement of a vehicle.

### In battery heating control:

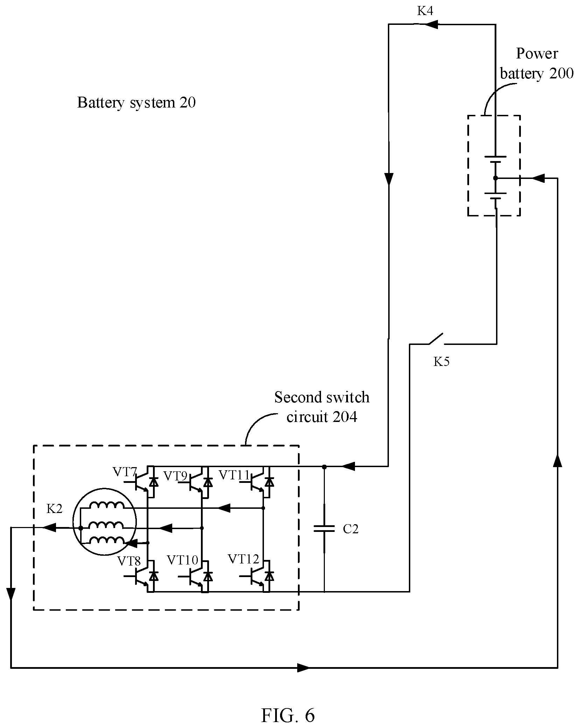

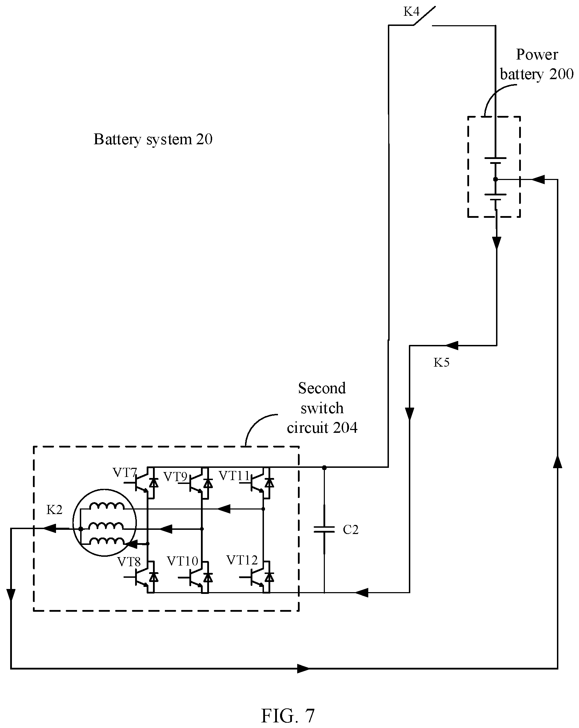

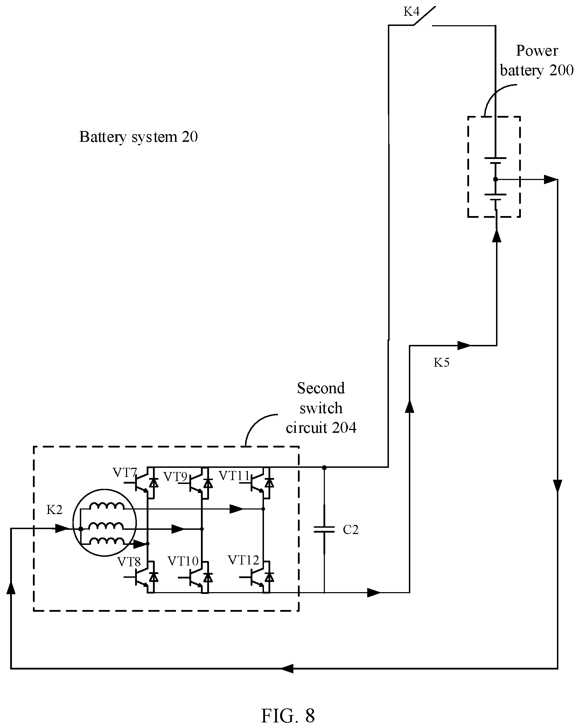

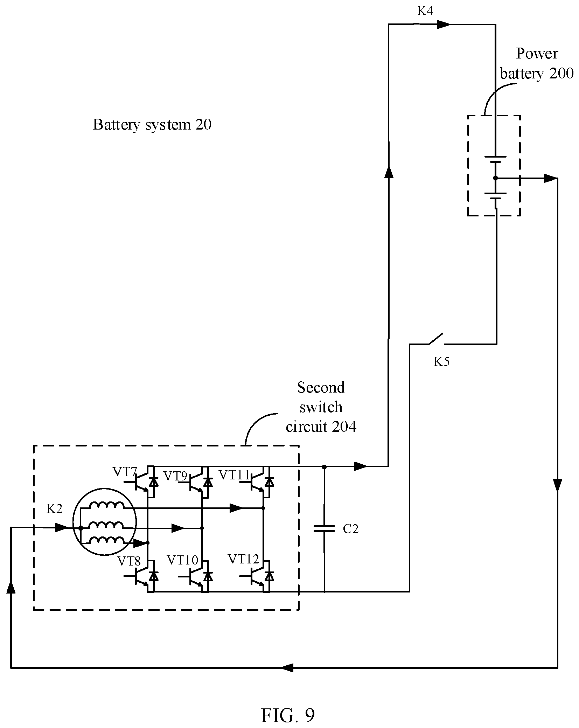

The control unit 205 may perform cyclic control at a specific frequency in the following sequence: turning on the second switch K2, controlling VT7, VT9, and VT11 to be simultaneously turned on to charge the three-phase winding of the second motor, controlling VT7, VT9, and VT11 to be simultaneously turned off to enable the three-phase winding of the second motor to discharge, controlling VT8, VT10, and VT12 to be simultaneously turned on to charge the three-phase winding of the second motor, and controlling VT8, VT10, and VT12 to be simultaneously turned off to enable the three-phase winding of the second motor to discharge. A corresponding current direction may be shown in FIG. 6 to FIG. 9. Currents between two half-packs of the power battery oscillate with each other to perform pulse charging and discharging. Because of internal resistance of the battery, the battery generates heat, thereby implementing self-heating of the battery.

The bridge arm switch in the foregoing embodiments may be a metal-oxide-semiconductor field-effect transistor (MOSFET for short) or an insulated gate bipolar transistor (IGBT for short) made from a silicon semiconductor material (silicon, Si), a third-generation wide-bandgap semiconductor material such as silicon carbide (SiC), gallium nitride (GaN), diamond (diamond), or zinc oxide (ZnO), or other materials. This may be specifically determined based on an actual application scenario, and is not limited herein.

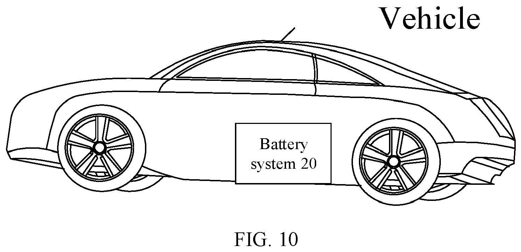

An embodiment of this application further provides a vehicle. The vehicle includes the battery system described in any one of the embodiments of this application, to implement the control method in any one of the foregoing embodiments. Referring to FIG. 10, FIG. 10 is a schematic diagram of a vehicle according to an embodiment of this application. As shown in FIG. 10, the vehicle may include a battery system 20, so that when the vehicle is charged, battery self-heating does not require an external heating device, thereby reducing costs.

An embodiment of this application further provides a power supply system. The power supply system includes an electric device and the battery system described in any one of the embodiments of this application, and the battery system is configured to supply electric energy to the electric device. The power supply system may include a data processing and logical control unit, to implement the control method in any one of the foregoing embodiments.

An embodiment of this application further provides an energy storage device. The energy storage device may include the battery system described in any one of the embodiments of this application. The energy storage device may be used for power plant storage; may be used for grid-side storage, for example, a large-scale containerized energy storage product; may be used for industrial and commercial storage, for example, may be a cabinet-type energy storage product; may be a residential energy storage product; or may be another type of energy storage product. This is not limited in this application.

An embodiment of this application provides a computer-readable storage medium. The computer-readable storage medium stores a computer program, and when the computer program is executed by a processor, the control method in any one of the foregoing embodiments is implemented.

An embodiment of this application provides a computer program product. The computer program product includes a computer program, and when the computer program is executed by a processor, the control method in any one of the foregoing embodiments is implemented.

An embodiment of this application provides a chip. The chip includes instructions, and when the instructions are run, the control method in any one of the foregoing embodiments is implemented.

In the description of the embodiments of this application, it will be noted that the words such as "first" and "second" are used to distinguish same or similar items whose functions are basically the same. A person skilled in the art will understand that words such as "first" and "second" do not limit a quantity and an execution order, and words such as "first" and "second" do not limit a definite difference, and therefore will not be understood as a limitation on this application.

The foregoing disclosure is merely a preferred embodiment of this application, and certainly is not intended to limit the scope of the claims of this application. A person of ordinary skill in the art will understand that all or some of procedures for implementing the foregoing embodiments and equivalent modifications made according to the claims of this application still shall fall within the scope of this application.

## Claims

1. A control method, comprising:
when detecting a signal of a first charging port and/or a signal of a second charging port, controlling (S101) a first switch circuit to enable the first charging port and/or the second charging port to charge a power battery; and
controlling (S102) a second switch circuit to enable the power battery to undergo pulse charging and discharging, so that the power battery is self-heated.

2. The control method according to claim 1, wherein controlling (S101) the first switch circuit to enable the first charging port and/or the second charging port to charge the power battery comprises:
turning on a first switch when an output voltage of a charging pile is lower than a charging voltage required by the power battery; and
turning on a first lower bridge arm switch to charge a first inductor, and turning off the first lower bridge arm switch and turning on a first upper bridge arm switch, so that the first inductor and the charging pile charge the power battery together, wherein the first switch circuit comprises the first switch, a first bridge arm switch, and the first inductor, and the first bridge arm switch comprises the first upper bridge arm switch and the first lower bridge arm switch.

3. The control method according to claim 1, wherein controlling (S101) the first switch circuit to enable the first charging port and/or the second charging port to charge the power battery comprises:
turning on a first switch when an output voltage of a charging pile is higher than a charging voltage required by the power battery; and
turning on a first upper bridge arm switch, so that the charging pile charges the power battery, wherein the first switch circuit comprises the first switch and a first bridge arm switch, and the first bridge arm switch comprises the first upper bridge arm switch and a first lower bridge arm switch.

4. The control method according to any one of claims 1 to 3, wherein controlling (S102) the second switch circuit to enable the power battery to undergo pulse charging and discharging comprises:
turning on a second switch; and
at a preset frequency, cyclically turning on a second upper bridge arm switch to charge a second inductor, turning off the second upper bridge arm switch to enable the second inductor to discharge, turning on a second lower bridge arm switch to charge the second inductor, and turning off the second lower bridge arm switch to enable the second inductor to discharge, so that currents between at least one half-pack of the power battery oscillate with each other to perform pulse charging and discharging, wherein the second switch circuit comprises the second switch, the second inductor, and a second bridge arm switch, and the second bridge arm switch comprises the second upper bridge arm switch and the second lower bridge arm switch.

5. A battery system (20), comprising:
a power battery (200), configured to store energy;
a first charging port (201), wherein a positive electrode of the first charging port (201) is electrically connected to a positive electrode of a first switch circuit (203), and a negative electrode of the first charging port (201) is electrically connected to a negative electrode of the power battery (200);
a second charging port (202), wherein a positive electrode of the second charging port (202) is electrically connected to the positive electrode of the first switch circuit (203), and a negative electrode of the second charging port (202) is electrically connected to the negative electrode of the power battery (200);
the first switch circuit (203), wherein the first switch circuit (203) is electrically connected to the power battery (200);
a second switch circuit (204), wherein the second switch circuit (204) is separately electrically connected to a positive electrode and the negative electrode of the power battery (200) and a half-pack position of the power battery (200); and
a control unit (205), wherein the control unit (205) is separately electrically connected to the first charging port (201), the second charging port (202), the first switch circuit (203), and the second switch circuit (204), wherein
the control unit (205) is configured to: when detecting a signal of the first charging port (201) and/or a signal of the second charging port (202), control the first switch circuit (203) to enable the first charging port (201) and/or the second charging port (202) to charge the power battery (200); and
the control unit (205) is further configured to control the second switch circuit (204) to enable the power battery (200) to undergo pulse charging and discharging, so that the power battery (200) is self-heated.

6. The battery system (20) according to claim 5, wherein the first switch circuit (203) comprises a first switch, a first inductor, and a first bridge arm switch, the first bridge arm switch comprises a first upper bridge arm switch and a first lower bridge arm switch that are connected in series, a series connection point of the first upper bridge arm switch and the first lower bridge arm switch is a bridge arm midpoint of the first bridge arm switch, and the bridge arm midpoint of the first bridge arm switch is a first bridge arm midpoint; and
a first terminal of the first switch serves as an input terminal of the first switch circuit (203), the first terminal of the first switch is electrically connected to the positive electrode of the first charging port (201), a second terminal of the first switch is electrically connected to a first terminal of the first inductor, a second terminal of the first inductor is electrically connected to the first bridge arm midpoint, and two terminals of the first bridge arm switch serve as output terminals of the first switch circuit (203).

7. The battery system (20) according to claim 5 or 6, wherein the control unit (205) is further configured to:
turn on the first switch when an output voltage of a charging pile is lower than a charging voltage required by the power battery (200); and
turn on the first lower bridge arm switch to charge the first inductor, and turn off the first lower bridge arm switch and turn on the first upper bridge arm switch, so that the first inductor and the charging pile charge the power battery (200) together.

8. The battery system (20) according to claim 5 or 6, wherein the control unit (205) is further configured to:
turn on the first switch when an output voltage of a charging pile is higher than a charging voltage required by the power battery (200); and
turn on the first upper bridge arm switch, so that the charging pile charges the power battery (200).

9. The battery system (20) according to claim 5, wherein the second switch circuit (204) comprises a second switch, a second inductor, and a second bridge arm switch, the second bridge arm switch comprises a second upper bridge arm switch and a second lower bridge arm switch that are connected in series, a first terminal of the second inductor is electrically connected to a half-pack position of the power battery (200) through the second switch, a second terminal of the second inductor is electrically connected to a second bridge arm midpoint, and two terminals of the second bridge arm switch are respectively electrically connected to the positive electrode and the negative electrode of the power battery (200); and
a series connection point of the second upper bridge arm switch and the second lower bridge arm switch is a bridge arm midpoint of the second bridge arm switch, and the bridge arm midpoint of the second bridge arm switch is the second bridge arm midpoint.

10. The battery system (20) according to claim 9, wherein the control unit (205) is further configured to:
turn on the second switch; and
at a preset frequency, cyclically turn on the second upper bridge arm switch to charge the second inductor, turn off the second upper bridge arm switch to enable the second inductor to discharge, turn on the second lower bridge arm switch to charge the second inductor, and turn off the second lower bridge arm switch to enable the second inductor to discharge, so that currents between at least one half-pack of the power battery (200) oscillate with each other to perform pulse charging and discharging.

11. The battery system (20) according to claim 5, wherein the first switch circuit (203) comprises a first switch, a three-phase winding of a first motor, and a plurality of first bridge arm switches connected in parallel, one first bridge arm switch comprises a first upper bridge arm switch and a first lower bridge arm switch that are connected in series, a series connection point of the first upper bridge arm switch and the first lower bridge arm switch is a bridge arm midpoint of the first bridge arm switch, and the bridge arm midpoint of the first bridge arm switch is a first bridge arm midpoint; and
a first terminal of the first switch serves as an input terminal of the first switch circuit (203), the first terminal of the first switch is electrically connected to the positive electrode of the first charging port (201), a second terminal of the first switch is electrically connected to a common terminal of the three-phase winding of the first motor, the plurality of first bridge arm midpoints are electrically connected to a one-phase winding of the three-phase winding of the first motor, and parallel connection terminals of the plurality of first bridge arm switches connected in parallel serve as output terminals of a bridge arm conversion module.

12. The battery system (20) according to claim 11, wherein the control unit (205) is further configured to:
turn on the first switch when an output voltage of a charging pile is lower than a charging voltage required by the power battery (200); and
first simultaneously turn on a plurality of first lower bridge arm switches to charge the three-phase winding of the first motor, and then simultaneously turn off the plurality of first lower bridge arm switches and simultaneously turn on a plurality of first upper bridge arm switches, so that the three-phase winding of the first motor and the charging pile charge the power battery (200) together.

13. The battery system (20) according to claim 11, wherein the control unit (205) is further configured to:
turn on the first switch when an output voltage of a charging pile is higher than a charging voltage required by the power battery (200); and
simultaneously turn on a plurality of first upper bridge arm switches, so that the charging pile charges the power battery (200).

14. The battery system (20) according to claim 5, wherein the second switch circuit (204) comprises a second switch, a three-phase winding of a second motor, and a plurality of second bridge arm switches connected in parallel, one second bridge arm switch comprises a second upper bridge arm switch and a second lower bridge arm switch that are connected in series, a series connection point of the second upper bridge arm switch and the second lower bridge arm switch is a bridge arm midpoint of the second bridge arm switch, and the bridge arm midpoint of the second bridge arm switch is a second bridge arm midpoint; and
a common terminal of the three-phase winding of the second motor is electrically connected to a half-pack position of the power battery through the second switch, the plurality of second bridge arm midpoints are electrically connected to a one-phase winding of the three-phase winding of the motor, and parallel connection terminals of the plurality of second bridge arm switches connected in parallel are separately electrically connected to the positive electrode and the negative electrode of the power battery (200).

15. The battery system (20) according to claim 14, wherein the control unit (205) is further configured to:
turn on the second switch; and
at a preset frequency, cyclically simultaneously turn on a plurality of second upper bridge arm switches to charge the three-phase winding of the second motor, simultaneously turn off the plurality of second upper bridge arm switches to enable the three-phase winding of the second motor to discharge, simultaneously turn on a plurality of second lower bridge arm switches to charge the three-phase winding of the second motor, and simultaneously turn off the plurality of second lower bridge arm switches to enable the three-phase winding of the second motor to discharge, so that currents between at least one half-pack of the power battery (200) oscillate with each other to perform pulse charging and discharging.

16. The battery system (20) according to any one of claims 6 to 15, wherein the bridge arm switch is an insulated gate bipolar transistor (IGBT).

17. A power supply system, comprising an electric device and the battery system (20) according to any one of claims 5 to 16, wherein the battery system (20) is configured to supply electric energy to the electric device.

18. A computer-readable storage medium, wherein the computer-readable storage medium comprises instructions, and when the instructions are run by a processor, the control method according to any one of claims 1 to 4 is performed.

19. A chip, wherein the chip comprises instructions, and when the instructions are run, the control method according to any one of claims 1 to 4 is performed.

20. A vehicle, comprising the battery system (20) according to claims 5 to 16.
